# DEMANDE DE BREVET EUROPEEN

(11) **EP 1 054 339 A1**
(43) Date de publication de la demande: **22.11.2000**
(21) Numéro de dépôt: 00401292.8
(22) Date de dépôt: 11.05.2000
(51) Int. Cl.: G06K 7/00

(54) **Appareil muni dans un boîtier d'un verrou pour un insert, boîtier comportant un verrou et procédé de montage d'un verrou dans un boîtier**

(30) Priorité: 21.05.1999 FR 9906527
(71) Demandeur: ALCATEL, 75008 Paris (FR)
(72) Inventeur: De Champs, Vincent, 78600 Maisons-Lafitte (FR); Guillard, Rodolphe, 92600 Asnieres (FR)
(74) Mandataire: Croonenbroek, Thomas Jakob

(57) **Abrégé**

Appareil comportant un boîtier (3) et un verrou (1) pour maintenir un insert SIM en contact avec un connecteur (8). Ce verrou comportant deux paires d'ailettes (14, 15) coopérant avec deux paires de pattes (38, 39) surplombant un logement (2) du boîtier, acceptant ce verrou à une bordure (13) d'un orifice (4) de ce boîtier recevant l'insert SIM. Le verrou est inséré depuis une face supérieure du boîtier et coulisse à l'intérieur du logement entre deux positions verrouillée et déverrouillée. Le verrou est maintenu entre ces deux positions par des moyens mécaniques. Le verrou a une structure telle qu'il existe une manière unique d'insérer ce verrou dans son logement.

## Description

La présente invention a pour objet un appareil muni dans un boîtier d'un verrou pour un insert, un boîtier comportant un tel verrou et un procédé de montage d'un verrou dans un boîtier. Elle trouve plus particulièrement son utilisation dans le domaine des téléphones mobiles. Un insert SIM correspond à une clef autorisant à un possesseur de cette clef un accès à un réseau de télécommunications. L'insert SIM, pour être fonctionnel, doit être connecté à un circuit imprimé de l'appareil.

L'invention concerne un dispositif permettant de maintenir un tel insert SIM en connexion avec ce circuit imprimé. L'invention est notamment adaptée pour les téléphones mobiles acceptant une puce de type SIM montée sur un insert de petite taille. L'invention a également pour objet le procédé de montage d'un tel verrou dans un boîtier d'un appareil, notamment dans un boîtier de téléphone mobile. L'intérêt de l'invention est qu'elle propose un verrou pouvant être monté de manière automatisée dans un tel boîtier, ce verrou étant par ailleurs facile à manipuler.

Dans l'état de la technique, un verrou pour maintenir un insert SIM dans une cavité d'un boîtier de téléphone est généralement constitué d'une plaque coulissante. Cette plaque-verrou peut être coulissée dans un logement situé au-dessus de la cavité d'une première position déverrouillée vers une deuxième position verrouillée, et de cette deuxième position à nouveau vers la première. Pour coulisser, la plaque-verrou est munie de deux rails sur deux faces latérales. Ces rails coopèrent avec des rainures localisées sur deux bordures latérales du logement acceptant la plaque-verrou. Dans un exemple, des téléphones comportent une telle plaque-verrou en tôle.

Pour monter un tel verrou dans son logement, il est nécessaire d'engager les rails du verrou dans un plan formé par les deux rainures en vis-à-vis de ces rails. Etant donné que ce type de verrou est prévu pour maintenir un insert SIM de petite taille, la cavité du boîtier devant recevoir cet insert est également de petite taille. Or le verrou devant être placé dans le même plan que les rainures, doit également être présenté dans un plan de l'orifice de cette cavité. Mais le verrou a une taille importante car il doit pouvoir être manipulé manuellement, après avoir été monté dans le boîtier du téléphone. Il y a donc peu de marge de manoeuvre de ce verrou au niveau de l'orifice de la cavité. En pratique, les rails du verrou sont engagés manuellement dans les rainures.

Un verrou de l'état de la technique pose donc un problème. En effet ce verrou de l'état de la technique n'autorise pas une grande tolérance de montage de ce verrou dans son logement. Par ailleurs la mise en place d'un tel verrou dans un logement d'un boîtier n'est pas automatisable, car ce verrou ne présente pas de détrompeur permettant de l'insérer d'une manière correcte. Les verrous de l'état de la technique sont donc insérés manuellement dans leur logement. Le montage manuel, et le risque de mauvais montage inhérent au verrou de l'état de la technique constituent un problème.

L'invention a pour objet de remédier aux problèmes cités en proposant un verrou pouvant être inséré de manière automatisée dans un logement d'un boîtier. Dans l'invention, la modalité d'insertion de ce verrou à l'intérieur de son logement se fait selon une direction perpendiculaire à un axe de coulissement du verrou. L'axe de coulissement se définit par l'axe de translation de ce verrou le long des rails entre une première position verrouillée et une deuxième position déverrouillée.

Dans ce but, le verrou selon l'invention comporte sur un premier côté deux ailettes espacées l'une de l'autre d'un écartement donné, et sur un côté opposé à ce premier côté, le verrou comporte deux autres ailettes. De préférence, les ailettes ont la même structure. Elles sont placées symétriquement en vis-à-vis et sont espacées d'un même écartement. Par ailleurs le logement du verrou comporte deux paires de pattes. Les deux paires de pattes sont situées de part et d'autre du logement. Ces paires de pattes surplombent un fond du logement. Les pattes coopèrent avec les ailettes. Une largeur de ces pattes est inférieure à un écartement existant entre deux ailettes situées d'un même côté. Par ailleurs les deux paires de pattes sont espacées, d'un même côté, d'une distance supérieure à une largeur d'une ailette. Ainsi pour insérer correctement un verrou selon l'invention dans le logement d'un boîtier, on place le verrou à la verticale au-dessus du logement. Plus exactement, on dispose un écartement entre deux ailettes exactement au-dessus d'une patte de la première paire de patte du logement. Ainsi lorsqu'on descend le verrou vers le fond de son logement, les deux paires d'ailettes descendent autour de la première paire de pattes. Le verrou est alors dans une première position.

Ensuite, dans une deuxième étape de montage, on glisse le verrou, parallèlement au fond du logement, en faisant coulisser les ailettes sous les pattes, de manière à ce que des moyens mécaniques de rétention du verrou dans son logement s'enclenchent. Une butée du fond du logement est placée dans une alvéole du verrou de telle sorte qu'une mobilité horizontale, selon le fond du logement, est également limitée. Le verrou peut ainsi se déplacer entre la première position et une deuxième position. Puis le verrou ne peut plus se déplacer qu'entre cette deuxième position et une troisième position. La deuxième position correspond à la position verrouillée du verrou. La troisième position est telle que le verrou vient au contact d'une butée du logement. Dans la troisième position, le verrou dégage un orifice permettant l'introduction d'un insert dans la cavité du boîtier, notamment l'introduction d'un insert SIM. Cette troisième position est dite position déverrouillée. Une fois le verrou monté, le verrou ne peut être déplacé qu'entre la deuxième et la troisième position. En effet, la butée maintenue dans l'alvéole du verrou empêche la sortie du verrou de son logement. Dans un exemple, le verrou est maintenu en position verrouillée par le biais d'un pion de la surface inférieure du verrou qui s'emboîte dans une anfractuosité du fond du logement.

L'invention concerne donc un appareil comportant un boîtier muni d'un orifice épousant un contour d'un insert à puce, cet insert à puce étant maintenu contre un connecteur d'un circuit contenu dans ce boîtier, d'une part par un ergot du boîtier situé sur une première bordure de l'orifice, et d'autre part par un verrou mobile situé sur une deuxième bordure de cet orifice, caractérisé en ce que le verrou comporte deux paires d'ailettes latérales et en ce que la deuxième bordure comporte un logement, acceptant le verrou, muni de deux paires de pattes latérales surplombant ce logement, destinées à coopérer avec les ailettes du verrou et telles qu'une largeur d'un écartement entre deux paires d'ailettes est égale ou supérieure à une largeur d'une patte et telles qu'une largeur d'un espace entre deux paires de pattes est égale ou supérieure à une largeur d'une ailette.

L'invention a également pour objet un procédé de montage d'un verrou dans un logement d'un boîtier d'un appareil comportant les étapes suivantes :
- on place un verrou au-dessus d'un logement de telle manière qu'un écartement entre deux paires d'ailettes du verrou est situé verticalement au-dessus d'une paire de pattes du boîtier surplombant le logement ;
- on enfonce verticalement le verrou dans son logement dans une première position, telle qu'un pion en relief de la face inférieure du verrou s'emboîte dans une première anfractuosité d'un fond du logement ;
- on pousse le verrou parallèlement à un fond du logement ;
- on force un chanfrein d'une face inférieure du verrou contre une butée du fond du logement, de manière à placer le verrou dans une deuxième position telle que la butée est engagée dans une alvéole de la face inférieure du verrou ;
- on peut déplacer le verrou parallèlement au fond du logement dans une troisième position telle que le verrou est appuyé contre un rebord du logement et le pion s'emboîte dans une deuxième anfractuosité du fond du logement.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : un procédé de montage d'un verrou selon l'invention dans un boîtier;
- Figure 2 : une vue de la face inférieure d'un verrou selon l'invention ;
- Figure 3 : une vue d'un fond d'un logement acceptant un verrou selon l'invention.

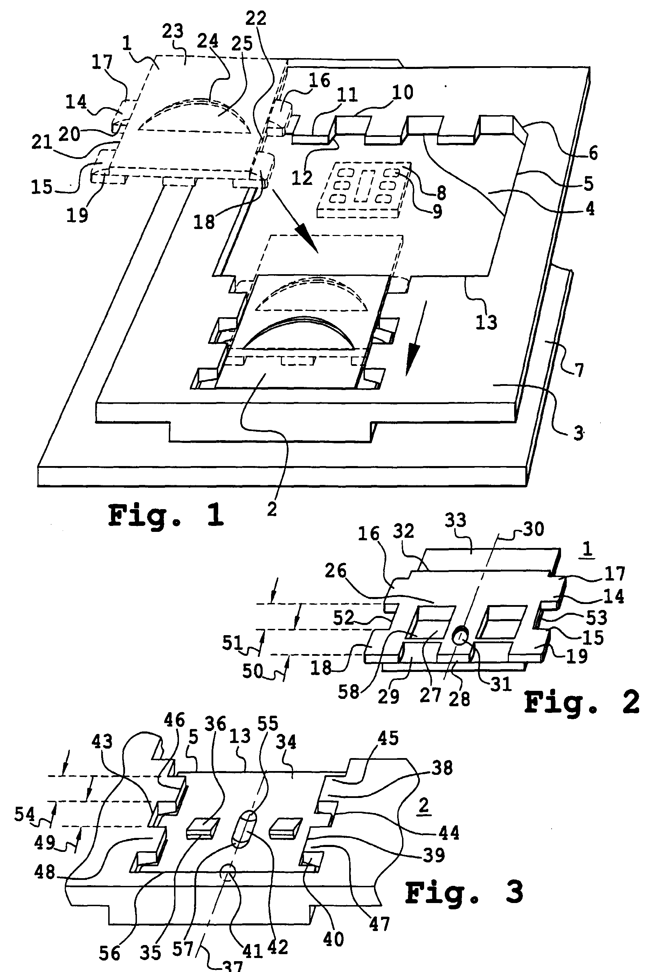

La figure 1 montre un verrou 1 selon l'invention. Le verrou 1 est adapté pour être monté dans un logement 2 d'un boîtier 3. Le boîtier 3 est préférentiellement un corps de téléphone portable. Le boîtier 3 comporte un orifice 4. L'orifice 4 a un contour 5. Le contour 5 a une forme globalement rectangle. Le contour 5 comporte un coin 6 tel que ce coin 6 est écorné. Le coin 6 ne forme pas un angle droit. Le contour 5 présente un contour complémentaire d'un contour d'un insert SIM de l'état de la technique. En effet un insert SIM de l'état de la technique a une forme rectangulaire dont l'un des coins est écorné. Cette forme spécifique permet de placer un tel insert SIM d'une manière unique dans l'orifice 4.

L'orifice 4 débouche dans une cavité du boîtier 3 dans laquelle est logé un circuit imprimé 7. Le circuit imprimé 7 est situé sous la face supérieure du boîtier 3. Le circuit imprimé 7 comporte un connecteur 8. Le connecteur 8 est placé en vis-à-vis de l'orifice 4. Le connecteur 8 présente des plages de contact 9. Les plages de contact 9 sont prévues pour entrer en contact avec la puce SIM de l'insert. Pour maintenir un insert SIM (non représenté) contre ce connecteur 8, une première bordure 10 de l'orifice 4 comporte un ou plusieurs ergots 11. Cet ergot 11 comporte de préférence un chanfrein 12. Dans un exemple préféré de l'invention, la bordure 10 comporte trois ergots tels que l'ergot 11. Le chanfrein 12 est orienté vers le circuit imprimé 7. Le chanfrein 12 est destiné à guider une face supérieure de l'insert. Cette face supérieure de l'insert est opposée à une face inférieure de l'insert en contact avec le connecteur 8. Par ailleurs une deuxième bordure 13 du contour 5 présente le verrou 1. La bordure 13 est opposée à la bordure 10. Le verrou 1 peut être déplacé de manière à déborder au-dessus de l'orifice 4, au-delà de la bordure 13

Le verrou 1 est, dans un exemple, réalisé en une plaque de matière plastique. Le verrou 1 comporte vers l'avant et vers l'arrière respectivement une première paire d'ailettes 14 et une deuxième paire d'ailettes 15. Sur la figure 1, la première paire d'ailettes 14 comporte une ailette avant droite 16 et une ailette avant gauche 17. La deuxième paire d'ailettes 15 comporte une ailette arrière droite 18 et une ailette arrière gauche 19. Les ailettes 16, 17, 18 et 19 ont la même forme. Elles comportent notamment un chanfrein supérieur 20. Les ailettes 17 et 19 sont situées sur un premier flanc 21 du verrou 1 et les ailettes 16 et 18 sont situées sur un deuxième flanc 22 du verrou 1. Les flancs 21 et 22 sont opposés.

Le verrou 1 comporte une face supérieure 23. Cette face supérieure 23 comporte une irrégularité de surface, de manière à créer une zone de préhension. Cette zone de préhension permet à un utilisateur de déplacer le verrou 1 à l'intérieur de son logement. Dans un exemple préféré de l'invention, la zone de préhension est un ongle 24. L'ongle 24 a une forme en demi-cercle. Une profondeur 25 de l'ongle 24 par rapport à un plan formé par la face supérieure 23 décroît dans le sens d'une direction reliant la paire d'ailettes 14 à la paire d'ailettes 15. La zone de préhension peut également être un grillage ayant une même épaisseur que la hauteur 25. Dans ce cas, le grillage ne présente pas d'orientation pour la manipulation.

La figure 2 présente une vue de dessous du verrou 1. Le verrou 1 comporte une face inférieure 26. Cette face inférieure 26 est opposée à la face supérieure 23. La face inférieure 26 comporte une alvéole 27. Sur un premier côté 28, perpendiculaire aux côtés 21 et 22, le verrou 1 comporte au moins un chanfrein 29. Le chanfrein 29 est dans un prolongement de l'alvéole 27. Le chanfrein 29 forme un angle environ à 45° vis-à-vis de la face inférieure 26. Dans un exemple préféré de l'invention, le verrou 1 comporte deux cavités telles que l'alvéole 27 et deux chanfreins tels que le chanfrein 29. Ces deux cavités et ces deux chanfreins sont alors symétriques l'un de l'autre par rapport à un plan 30. Le plan 30 est orthogonal au plan formé par la face inférieure 26. Ce plan 30 est un plan de symétrie du verrou 1. Il est perpendiculaire à des axes définis par les paires d'ailettes 14 et 15. La face inférieure 26 comporte par ailleurs un pion sphérique 31 protubérant. Ce pion sphérique 31 est coupé par le plan de symétrie 30. Le pion 31 est sensiblement situé sur un axe formé par la paire d'ailettes 15.

La face inférieure 26 comporte un décrochement 32 et définit une portion avant 33. La portion 33 est plane. Elle s'étend au-delà de l'axe formé par la paire d'ailettes 14. La portion 33 est parallèle à la face inférieure 26. La portion 33 est destinée à venir au contact d'une face supérieure d'un insert placé dans la cavité du boîtier 3. En effet, dans une position verrouillée du verrou, la portion 33 dépasse au-delà de la bordure 13 de l'orifice 4.

La figure 3 montre le logement 2 acceptant le verrou 1 selon l'invention. Le logement 2 comporte un fond 34. Le fond 34 forme un plan, l'altitude de ce plan étant inférieure à celle du plan de la face supérieure du boîtier 3. Le fond 34 comporte une butée 35. La butée 35 a une géométrie adaptée pour se retrouver prisonnière dans l'alvéole 27. La butée 35 comporte notamment un chanfrein 36 orienté en direction de la bordure 13. Dans un exemple préféré de l'invention, le fond 34 comporte deux butées telles que la butée 35. Dans ce cas, les deux butées telles que 35 sont disposées de part et d'autre d'un plan de symétrie 37 du logement 2. Le plan de symétrie 37 est orthogonal au fond 34 et à la bordure 13. Le plan de symétrie 37 se confond avec le plan de symétrie 30 du verrou, lorsque le verrou 1 est monté dans le logement 2.

Le logement 2 comporte deux paires de pattes 38 et 39. La première paire de pattes 38 est la plus proche de la bordure 13. Les pattes des paires de pattes 38 et 39 surplombent le fond 34. Les altitudes des pattes sont telles que les ailettes 16, 17, 18 et 19 peuvent glisser, contre le fond 34, sous ces paires de pattes. Les paires de pattes 38 et 39 comportent des chanfreins inférieurs 40. Ces chanfreins 40 glissent contre les chanfreins supérieurs 20 des paires d'ailettes 14 et 15.

Le fond 34 comporte également une première anfractuosité 41 et une deuxième anfractuosité 42. L'anfractuosité 42 a une forme oblongue. L'anfractuosité 41 a une forme de creux sphérique. Les anfractuosités 41 et 42 coopèrent avec le pion sphérique 31.

Pour monter le verrou 1 dans un logement 2, on dispose la face supérieure 23 de ce verrou dans un plan situé au-dessus d'un plan formé par la face supérieure du boîtier 3, parallèlement à ce même plan. Par ailleurs, on dispose le verrou de telle sorte que les axes formés par les paires d'ailettes 14 et 15 soient parallèles aux axes formés par les paires de pattes 38 et 39. De plus, pour orienter correctement ce verrou 1 dans le logement 2, le verrou 1 est disposé au-dessus du logement 2, de telle sorte qu'une projection orthogonale des ailettes 18 et 19 corresponde à des espaces intercalaires respectivement 43 et 44, situés entre les paires de pattes 38 et 39. On dispose l'ongle 24 de manière à ce qu'une extrémité du demi-cercle formé par l'ongle 24 soit orienté vers la bordure 13.

En effet, la paire de pattes 38 comporte une première patte avant droite 45 et deuxième patte avant gauche 46. De même la deuxième paire de pattes 39 comporte une première patte arrière droite 47 et une deuxième patte arrière gauche 48. Ainsi, l'espace 44 correspond à un espace entre les pattes 45 et 47. Et l'espace 43, en vis-à-vis avec l'espace 44, correspond à un espace entre les pattes 46 et 48. Sur la figure 3, l'espace 43 et l'espace 44 ont une même longueur 49. Cette longueur 49 est supérieure ou égale à une longueur 50 (figure 2) correspondant à une longueur des pattes 18 et 19. Une longueur 51 correspond à une longueur des écartements 52 et 53, entre les paires d'ailettes 14 et 15, existant respectivement sur les flancs 21 et 22. Par ailleurs pour permettre l'emboîtement du verrou 1 dans le logement 2. La longueur 51 est supérieure à une longueur 54 correspondant à la longueur de la paire de pattes 38.

Ainsi dans une première étape, on descend le verrou 1 vers le logement 2 en maintenant la face supérieure 23 parallèle au fond 34 du logement 2. On glisse le verrou 1 dans le logement 2 en faisant passer les pattes 45 et 46 respectivement entre les écartements 53 et 52 du verrou 1. Simultanément, on glisse les ailettes 18 et 19 respectivement dans les espaces 44 et 43 du logement 2. On descend ainsi le verrou 1 vers le fond 34 de telle sorte que la face inférieure 26 soit en contact avec le fond 34. Lorsque la face 26 et le fond 34 sont en contact, le pion 31 s'enfonce dans une première extrémité 55 de la deuxième anfractuosité 42. Cette position correspond à une première position du verrou dans le logement correspondant à une position de montage.

Le verrou 1 étant symétrique par rapport au plan de symétrie 30, si les paires d'ailettes 14 et 15 sont correctement disposées à l'aplomb des paires de pattes 38 et 39, mais que la face supérieure 23 est en vis-à-vis avec le fond 34, alors le verrou 1 ne peut pas coulisser depuis la première position de montage vers la deuxième position. En effet, les paires d'ailettes 14 et 15 n'occupent pas toute l'épaisseur du verrou 1. Elles ne peuvent coulisser sous les pattes 38 et 39 que si elles sont situées à une altitude correcte vis à vis du fond 34 du logement 2. Autrement, il faudrait dans ce cas de figure que la face supérieure 23 soit enfoncée plus profondément dans le logement 2, afin que les paires d'ailettes 14 et 15 puissent coulisser sous les paires de pattes 38 et 39 : ce qui n'est pas réalisable. Donc, la structure des paires d'ailettes 14 et 15 joue un rôle de détrompage lors du montage du verrou 1 dans le logement 2.

Ensuite, on déplace le verrou 1 dans le logement 2 selon un plan parallèle au fond 34. Les ailettes 16, 17, 18, et 19 coulissent sous les pattes 44, 45, 46 et 47. On déplace le verrou 1 de telle sorte, que le pion 31 est glissé vers une deuxième extrémité 57 de la deuxième anfractuosité 42. Au cours de ce déplacement, le chanfrein 29 est appuyé contre le chanfrein 36. Les chanfreins 29 et 36 coopèrent de telle sorte que la butée 35 s'engage par effet élastique dans l'alvéole 27. Ainsi le verrou 1 est placé dans une deuxième position dite verrouillée. Le passage de la première position à la deuxième position est irréversible. Ensuite, le verrou 1 peut évoluer dans le logement 2 de cette deuxième position uniquement vers une troisième position. Cette troisième position correspond à une position dans laquelle le côté 28 du verrou 1 vient au contact d'un rebord 56 du logement 2. Dans cette troisième position le pion 31 vient se loger dans la première anfractuosité 41.

La troisième position correspond à une position dite déverrouillée. En effet, lorsque le pion 31 est dans le logement formé par la première anfractuosité 41, et que les butées 35 sont contraintes contre des parois de l'alvéole 27, la portion 33 ne dépasse pas de la bordure 13. Dans la deuxième position dite position verrouillée, le verrou est maintenu en place car il est retenu d'une part par le pion 31 retenu par la deuxième extrémité 57 de la deuxième anfractuosité 42 et d'autre part par la butée 35 qui vient en appui contre une paroi 58 de l'alvéole 27. Le verrou 1 est mobile uniquement par translation selon l'axe 37. Entre la deuxième et la troisième position le verrou 1 ne peut pas sortir de son logement. Le déplacement du verrou 1 dans son logement est facilité par la présence de l'ongle 24 sur la surface supérieure 23 du verrou 1. L'ongle 24 est adapté pour permettre un déplacement manuel du verrou dans son logement.

En variante, la deuxième position est une position déverrouillée, la troisième position étant une position verrouillée. Dans ce cas le verrou est engagé par l'arrière.

Le système de verrouillage ainsi conçu nécessite que l'insert SIM soit installé dans la cavité du boîtier 3 d'une certaine manière. Dans un premier temps, le verrou 1 est placé en position déverrouillée sur le logement 2. L'insert SIM est présenté à l'oblique de telle sorte qu'un premier champ de ce contact vienne au contact de la bordure 10 en passant en dessous des pattes 11. Ensuite par une rotation autour de l'axe formé par la bordure 10, l'insert SIM est descendu dans la cavité. Ainsi l'insert SIM vient au contact de contacts métalliques 9 présentés par le connecteur 8 logé au fond de la cavité du boîtier 3. Une fois l'insert SIM en place, pour le maintenir dans cette position, on déplace le verrou 1 dans la position verrouillée.

Dans une variante de l'invention, le verrou peut comporter trois paires d'ailettes, espacées les unes des autres d'un écartement correspondant à une largeur d'une paire de pattes surplombant le logement du verrou. Dans ce cas, le verrou peut également comporter trois paires de pattes.

Dans une autre variante de l'invention, les ailettes disposées de part et d'autre du verrou peuvent ne pas être symétriques l'une de l'autre. En effet, elles peuvent être disposées en quinconce. Dans ce cas également, la disposition des paires de pattes sur les côtés du verrou est en quinconce. Les écartements entre ailettes sont dimensionnés de manière à ce qu'ils correspondent aux largeurs des pattes.

La solution de l'invention permet une automatisation de la mise en place du verrou, notamment en le saisissant avec une machine de transfert munie d'une pipette d'aspiration. Le verrou et l'insert peuvent alors être mis en place par une machine.

## Revendications

1. Appareil comportant un boîtier (3) muni d'un orifice (4) épousant un contour (6) d'un insert à puce, cet insert à puce étant maintenu contre un connecteur (8) d'un circuit (7) contenu dans ce boîtier, d'une part par un ergot du boîtier situé sur une première bordure de l'orifice, et d'autre part par un verrou (1) mobile situé sur une deuxième bordure (13) de cet orifice, caractérisé en ce que le verrou comporte deux paires d'ailettes (14, 15) latérales et en ce que la deuxième bordure comporte un logement (2), acceptant le verrou, muni de deux paires de pattes (38, 39) latérales surplombant ce logement, destinées à coopérer avec les ailettes du verrou et telles qu'une largeur (51) d'un écartement (52, 53) entre deux paires d'ailettes est égale ou supérieure à une largeur (54) d'une patte et telles qu'une largeur (49) d'un espace (43, 44) entre deux paires de pattes est égale ou supérieure à une largeur (50) d'une ailette (18).

2. Appareil selon la revendication 1 caractérisé en ce que le logement comporte une butée (35) et le verrou comporte une alvéole (27) retenant cette butée entre une première position et une deuxième position.

3. Appareil selon la revendication 2 caractérisé en ce que la première position et la deuxième position sont distinctes d'une troisième position correspondant à une position de mise en place du verrou dans son logement.

4. Appareil selon l'une des revendications 2 à 3 caractérisé en ce que le verrou comporte un chanfrein (29) afin de guider la butée dans l'alvéole lors du déplacement du verrou de la troisième position à la deuxième position.

5. Appareil selon l'une des revendications 1 à 4 caractérisé en ce que le verrou ou respectivement le logement comporte un moyen de blocage, par exemple un pion (31) en relief, et en ce que le logement ou respectivement le verrou comporte un moyen de blocage complémentaire, par exemple une première anfractuosité (41) acceptant ce pion lorsque le verrou est dans une position déverrouillée, et une deuxième anfractuosité (42) acceptant ce pion lorsque le verrou est dans une position verrouillée.

6. Appareil selon la revendication 5 caractérisée en ce la deuxième anfractuosité est oblongue.

7. Appareil selon l'une des revendications 1 à 6 caractérisé en ce que le verrou est en plastique.

8. Appareil selon l'une des revendications 1 à 7 caractérisé ne ce que le verrou comporte un ongle (24) en forme de croissant sur une face supérieure (23).

9. Appareil selon l'une des revendications 1 à 8 caractérisé en ce que les deux paires d'ailettes sont en vis à vis et en ce que les deux paires de pattes sont en vis à vis.

10. Boîtier muni d'un orifice épousant un contour d'un insert, notamment d'un insert à puce, cet insert devant être maintenu dans le boîtier, d'une part par un ergot du boîtier situé sur une première bordure de l'orifice, et d'autre part par un verrou mobile situé sur une deuxième bordure de cet orifice, caractérisé en ce que le verrou comporte deux paires d'ailettes latérales et en ce que la deuxième bordure comporte un logement, acceptant le verrou, muni de deux paires de pattes latérales surplombant ce logement, destinées à coopérer avec les ailettes du verrou et telles qu'une largeur d'un écartement entre deux paires d'ailettes est égale ou supérieure à une largeur d'une patte et telles qu'une largeur d'un espace entre deux paires de pattes est égale ou supérieure à une largeur d'une ailette.

11. Procédé de montage d'un verrou dans un logement d'un boîtier d'un appareil comportant les étapes suivantes :
- on place un verrou au-dessus d'un logement de telle manière qu'un écartement entre deux paires d'ailettes du verrou est situé verticalement au-dessus d'une paire de pattes du boîtier surplombant le logement ;
- on enfonce verticalement le verrou dans son logement dans une première position, telle qu'un pion en relief de la face inférieure du verrou s'emboîte dans une première anfractuosité d'un fond (34) du logement ;
- on pousse le verrou parallèlement à un fond du logement ;
- on force un chanfrein d'une face inférieure du verrou contre une butée du fond du logement, de manière à placer le verrou dans une deuxième position telle que la butée est engagée dans une alvéole de la face inférieure du verrou ;
- on peut déplacer le verrou parallèlement au fond du logement dans une troisième position telle que le verrou est appuyé contre un rebord (56) du logement et le pion s'emboîte dans une deuxième anfractuosité du fond du logement.

12. Procédé selon la revendication 11 caractérisé en ce que
- on place le verrou dans un état verrouillé en déplaçant le verrou de la troisième position vers la deuxième position
- on bloque le verrou dans cet état verrouillé en bloquant la butée contre une paroi de l'alvéole et le pion dans la première anfractuosité.
